# DEMANDE DE BREVET EUROPEEN

(11) **EP 3 792 846 A1**
(43) Date de publication de la demande: **17.03.2021**
(21) Numéro de dépôt: 20186489.9
(22) Date de dépôt: 17.07.2020
(51) Int. Cl.: G06Q 10/02, G06Q 30/06, G06Q 50/30

(54) **PROCEDE ET DISPOSITIF DE GESTION LOCATIVE DE VEHICULES**

(30) Priorité: 11.09.2019 FR 1910006
(71) Demandeur: Lojelis Holding, 63130 Royat (FR)
(72) Inventeur: JOURDY, Sylvain, 63130 ROYAT (FR)
(74) Mandataire: Dennemeyer & Associates S.A.

(57) **Abrégé**

Le procédé de gestion locative de véhicules (1) comprenant au moins une étape de collecte d'au moins une donnée concernant le véhicule (1), une étape de transfert de ladite donnée à un centre de gestion (4) des véhicules en location, une étape d'envoi d'au moins une instruction depuis le centre de gestion (4) au véhicule, caractérisé en ce qu'il comprend également au moins une étape de collecte et de transfert d'au moins une donnée concernant l'utilisateur du véhicule (1) au centre de gestion (4) et une étape d'envoi à l'utilisateur d'un tarif actualisé final selon les données reçues par le centre de gestion (4). L'invention comprend également un dispositif de mise en œuvre de l'invention.

## Description

La présente invention concerne un procédé de gestion locative de véhicules. L'invention concerne également un dispositif de mise en œuvre du procédé objet de l'invention.

Le terme véhicule désigne ici non seulement des véhicules légers ayant au moins deux roues tels que des motos, des scooters, des voitures mais également des véhicules de loisir tels que des quads ou des motoneiges, des trottinettes électriques, des véhicules utilitaires tels que des fourgons ou des camions ainsi que des engins de travaux publics, agricoles ou de manutention. Dans cette catégorie, on peut citer à titre d'exemples non limitatifs, des tractopelles, des grues, des toupies à béton, des tracteurs, des nacelles élévatrices, des chariots de manutention. L'invention s'applique également à des véhicules non terrestres, typiquement des jets-skis, des bateaux, à moteur ou à voile, pour un usage fluvial ou maritime.

La location de véhicules, quels que soient le type de véhicules et la durée de location, se développe tant au niveau des particuliers que des professionnels pour répondre à des besoins ponctuels de déplacement ou d'activité mais également dans un souci d'optimisation des frais liés à la mobilité, cela sur des durées variables allant de quelque heures à plusieurs mois. Par ailleurs, le développement de nouvelles technologies de communication et de nouveaux modèles économiques induit la mise à disposition en libre-service et de manière automatisée des véhicules, y compris leurs restitutions. Afin d'optimiser les diverse étapes de la location d'un véhicule, à savoir sa prise en charge, les options proposées et choisies par le locataire, le contrôle de l'état du véhicule avant et après location, sa localisation à tout moment et son lieu de restitution, plusieurs solutions sont proposées.

Ainsi on connait par EP-A-2 962 903 un procédé et un dispositif comportant des capteurs dans le véhicule permettant au locataire, par téléphone, de demander l'activation automatique de certaines options de sécurité, de média et/ou de confort dont est équipé son véhicule. La demande est traitée par un centre serveur distant qui donne instruction au véhicule d'activer les options, après paiement par le locataire de celles-ci.

FR-A-2 902 214 enseigne un dispositif de mesure en direct et en continu de la position du véhicule. Ces données sont transmises à un serveur distant, ce qui permet une facture exacte, cela dès le retour du véhicule selon le kilométrage parcouru.

FR-A-2 980 886 décrit un dispositif et un procédé de détection d'incidents sur un véhicule en cours de location. Cette détection est effectuée par des capteurs, les données étant envoyées en direct à un serveur. Ces données sont intégrées dans l'état du véhicule lors de la restitution et donne lieu, si besoin, à facturation. Si l'incident détecté est grave, le dispositif peut déclencher une alerte auprès du conducteur et/ou des services de secours.

FR-A-3 065 690 décrit un dispositif similaire dans lequel les données collectées sont analysées et permettent savoir si l'incident est un choc sur le véhicule. Selon le choc et les autres données collectées, le dispositif déclenche un contrôle de l'état du véhicule, une alerte au conducteur, un ordre de réparation et/ou un appel des secours.

WO-A-00/70530 divulgue un système entièrement automatique de transfert de données variées telles que le kilométrage, l'état du véhicule, le niveau d'essence, la géolocalisation à un centre serveur, ce qui va permettre une prise en charge et une restitution automatisées, avec un contrôle des informations relatives au chauffeur et la réalisation automatique d'un état du véhicule avant et après la location.

US-A-2002/184 062 fournit une solution au risque d'erreur lors de la prise des paramètres de location, à savoir le kilométrage, le niveau d'essence et l'état du véhicule, de manière automatique en début et fin de location.

FR-A-2 801 994 décrit un procédé d'échange d'informations entre un véhicule de location et un centre de gestion, cela même lorsque le véhicule est éloigné du centre de gestion. Les informations échangées ne concernent que l'état et le fonctionnement du véhicule.

Si l'état de la technique enseigne plusieurs solutions pour prendre en considération des données relatives au véhicule et les utiliser dans le cadre d'une gestion automatisée de la location d'un véhicule, il n'en demeure pas moins que ces informations sont utilisées dans un cadre tarifaire défini et avec un lieu de prise en charge et/ou de restitution fixé avant la prise du véhicule. Or, les utilisateurs souhaitent avoir une souplesse dans le lieu de prise en charge et/ou de restitution, la tendance étant de pouvoir disposer d'un véhicule libre en un point le plus proche possible de l'endroit où se trouve l'utilisateur et de pouvoir le restituer en un point le plus proche de sa destination finale. Une telle tendance est exploitée avec les services disponibles dans certaines villes de mise à disposition de voitures, de scooters, de vélos ou de trottinettes électriques.

Par ailleurs, une tarification personnalisable qui correspond au service et à l'usage effectif du véhicule est également souhaitée par les utilisateurs, sachant qu'actuellement le tarif est défini initialement, même en ce qui concerne la part variable qui, généralement, n'est fonction que du kilométrage parcouru. Les loueurs quant à eux souhaitent une plus grande automatisation des diverses taches, afin d'optimiser leurs services, de gérer plus aisément leurs parcs de véhicules en limitant les temps d'immobilisation des véhicules et de limiter la main d'œuvre nécessaire. De plus, l'état de la technique ne prend en compte que des données relatives au véhicule et non d'autres données susceptibles d'influer sur le déplacement du véhicule, telles que l'état de la circulation, la météorologie ou le comportement du conducteur.

C'est à ces besoins que se propose de remédier l'invention en proposant un procédé et un dispositif de gestion locative de véhicules permettant une automatisation optimale des tâches et offrant une souplesse de tarification et de lieux de prise en charge et/ou de restitution du véhicule, cela en intégrant d'autres données influant sur le déplacement du véhicule.

A cet effet, l'invention a pour objet un procédé de gestion locative de véhicules comprenant au moins une étape de collecte d'au moins une donnée concernant le véhicule, d'au moins une donnée concernant l'utilisateur, de paramètres relatifs aux conditions de circulation, une étape de transfert desdites données à un centre de gestion des véhicules en location, une étape d'envoi d'au moins une instruction depuis le centre de gestion au véhicule, caractérisé en ce qu'il comprend également au moins une étape d'envoi à l'utilisateur d'un tarif actualisé final selon les données reçues par le centre de gestion et en ce que lors du trajet et avant l'envoi du tarif actualisé final, un tarif actualisé en fonction de la conduite et de l'état du véhicule obtenu par la collecte des données à l'aide de capteurs est régulièrement fourni à l'utilisateur par le centre de gestion.

Ainsi, l'utilisateur, donc le locataire, du véhicule bénéficie en permanence, d'un tarif adapté au plus juste à l'utilisation qu'il fait du véhicule, cela en tenant compte un maximum de données susceptibles d'influer sur le comportement du véhicule et celui du conducteur. Un tarif actualisé, quasiment en temps réel, est fourni à l'utilisateur, selon les données collectées. En conséquence, en modifiant les paramètres d'utilisation du véhicule, par exemple en modulant la vitesse, la consommation, la sollicitation du moteur et en tenant compte des conditions de circulation, le conducteur, donc le locataire, influe sur les données prises en compte et transmises au centre de gestion. De la sorte, le tarif qui lui est proposé intègre ces paramètres et est réajusté, à la hausse ou à la baisse. Ainsi le comportement du locataire vis-à-vis du véhicule, donc l'état de ce dernier, est pris en compte en direct et en continu. en d'autres termes, le conducteur a lui-même un effet sur le tarif de location en étant, en quelque sorte, une des variables d'ajustement du tarif.

Par ailleurs, selon les données transmises au centre de gestion et/ou les souhaits du locataire, le centre de gestion peut également proposer un lieu de restitution optimisé, ce qui participe également à un tarif personnalisé.

Selon des aspects avantageux mais non obligatoires de l'invention, un tel procédé peut comprendre une ou plusieurs des étapes suivantes:
- L'étape de collecte de données concernant le véhicule et l'utilisateur est faite de manière automatisée par un portique adapté pour collecter des données relatives à l'extérieur du véhicule et par des capteurs internes au véhicule et donne lieu à un état du véhicule, cela lors de la prise et de la restitution du véhicule.
- L'étape d'envoi du tarif actualisé final est effectuée quelques kilomètres ou quelques minutes avant l'arrivée à destination du véhicule.

-L'invention concerne également un dispositif de mise en œuvre du procédé de gestion locative de véhicules conforme à une des étapes précédentes, comportant au moins un capteur de données relatives à la géolocalisation du véhicule, un capteur de l'état extérieur du véhicule, un capteur du niveau de carburant, un module de transfert des données collectées à un centre de gestion distant, caractérisé en ce qu'il comprend au moins un capteur de l'état de l'intérieur du véhicule, un capteur d'au moins une donnée concernant le fonctionnement du moteur, un capteur d'au moins une donnée concernant le conducteur, un module de réception et d'affichage d'informations émises par le centre de gestion.

Selon des aspects avantageux mais non obligatoires de l'invention, un tel dispositif peut comprendre une ou plusieurs des caractéristiques suivantes :
- Le dispositif comprend un capteur d'au moins une donnée relative aux capacités du conducteur à conduire un véhicule, un capteur d'au moins une donnée relative au châssis du véhicule, au train roulant du véhicule, à la charge du véhicule, à la présence d'accessoires.
- Le dispositif comprend un capteur d'au moins une donnée météorologique, une donnée relative aux conditions de circulation routière et à l'état de la route.
L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig.1] est une vue en perspective simplifiée d'un véhicule de location et d'une partie du dispositif de mise en œuvre du procédé conforme à un mode de réalisation de l'invention,
[Fig.2] est une vue en perspective simplifiée de l'intérieur du véhicule de la figure 1 et,
[Fig.3] est un diagramme simplifié illustrant les étapes principales du procédé objet de l'invention.

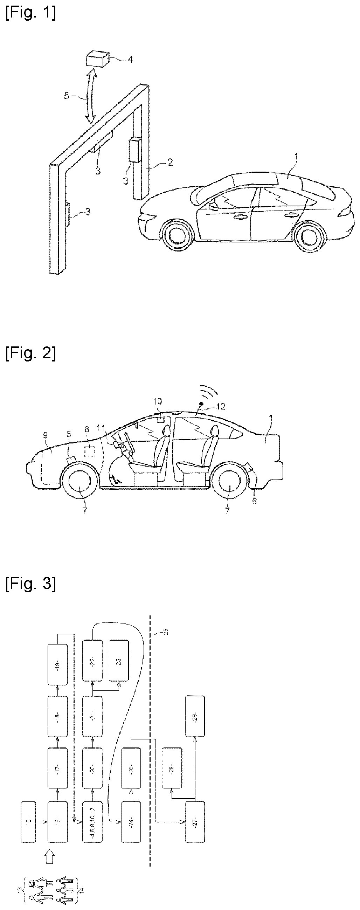

La figure 1 illustre un véhicule 1. Il s'agit ici, à titre purement illustratif, d'un véhicule léger, tel que fréquemment rencontré pour les locations destinées aux particuliers mais également aux professionnels, cela pour des courtes durées, typiquement de quelques semaines au plus ou pour des locations de longue durée, donc de plusieurs mois.

Le véhicule 1 est représenté prêt à passer sous un portique 2, étant entendu que le passage s'effectue soit par déplacement du véhicule 1 en direction du portique 2 fixe soit par déplacement du portique 2, par exemple sur des rails, le véhicule 1 étant immobile.

Le portique 2 est ici représenté comme un élément en forme de U. En variante, il a une autre forme, par exemple en L ou en arche. le portique 2 est équipé d'au moins un capteur 3, ici trois capteurs 3 sont illustrés. Leurs nombres et/ou leurs positions sur le portique 2 peuvent être différents. En variante, les capteurs sont montés sur un drone aérien ou terrestre qui est adapté pour, de manière automatisé, effectuer le tour du véhicule lorsque ce dernier est à l'arrêt ou en déplacement à faible vitesse.

Selon l'invention, le terme capteur désigne tout appareil, passif ou actif, ayant pour fonction de collecter au moins une caractéristique physique, chimique, thermique, électrique, magnétique, biologique du véhicule et/ou du conducteur du véhicule, cela par des techniques connues en soi. par la suite, le terme « donnée » sera employé pour désigner ces caractéristiques.

Ces capteurs 3, connus en soi, sont des capteurs adaptés pour contrôler au moins un paramètre représentatif de l'état extérieur du véhicule 1. Pour cela, il s'agit, par exemple, de capteurs optiques, qui prennent des vues du véhicule 1, sous forme de photos ou de vidéos, si besoin sous une lumière spécifique. En variante, d'autres capteurs sont utilisés, en complément et/ou à la place des capteurs optiques. Il peut s'agir, par exemple, de capteur thermique ou infrarouge. Dans tous les cas, les données collectées sont transmises, préférentiellement, en temps réel à un centre de gestion distant 4. En variante, les données collectées sont stockées temporairement au niveau du portique 2. La transmission des données s'effectue, avantageusement, par des moyens 5 non filaires connus en soi. A titre d'exemple, il s'agit de liaison Wifi, Bluetooth, 4G, radio ou autres. En variante, la transmission des données à partir du portique 2 est réalisée de manière filaire.

Le dispositif de mise en œuvre du procédé objet de l'invention comprend également, comme cela ressort de la figure 2, des capteurs installés dans le véhicule 1. Il peut s'agir de capteurs 6 adaptés pour collecter une caractéristique du train roulant, donc des pneus 7 et/ou des amortisseurs du véhicule 1. De tels capteurs 6 sont, par exemple, adaptés pour contrôler visuellement l'état d'usure des pneus 7. Lorsqu'il est installé dans le pneu 7, le capteur permet de contrôler la pression. Lorsqu'il est installé au niveau d'un amortisseur un capteur optique peut contrôler la course de l'amortisseur. D'autres capteurs 8 sont installés au niveau du moteur 9 du véhicule 1 et contrôlent divers paramètres tels que la consommation, la puissance, la température, les niveaux de liquides ou d'autres paramètres relatifs au fonctionnement du moteur 9. Avantageusement, les capteurs 8 sont des capteurs installés d'origine sur le moteur par le constructeur pour gérer et contrôler le moteur et auquel il est possible d'avoir accès à partir de l'ordinateur embarqué du véhicule. On conçoit que, dans le cadre de l'invention, des capteurs complémentaires sont installés, tant au niveau du moteur que de l'habitacle du véhicule, voire à l'extérieur de ce dernier.

Le véhicule 1 comprend aussi, dans l'habitacle, des capteurs 10 collectant des données sur le conducteur. Il peut s'agir de contrôler si le conducteur fume, a mis la ceinture de sécurité, de vérifier son alcoolémie, de géolocaliser le véhicule ou si l'habitacle est propre. Le véhicule 1 comprend également un organe 11 destiné à afficher des informations au conducteur, cet organe 11 est avantageusement pourvu d'une interface communicante avec l'utilisateur, par exemple un écran tactile. Dans ce cas, le conducteur peut échanger des informations avec le centre de gestion 4. Pour cela, le véhicule 1 est muni d'un moyen 12 de communication, sans fil, avec le centre de gestion 4. Dans un mode de réalisation, l'organe 11 comprend également un module de transfert de données en direction du centre serveur 4. Par ailleurs, le dispositif utilise pour la mise en œuvre du procédé les différents moyens d'acquisition de données, les capteurs et moyens de communication présents d'origine dans le véhicule 1. On conçoit aisément que le véhicule 1 et le portique 2 sont équipés de capteurs, moyens d'acquisition de données et de moyens de communication, de commande et de stockage de données nécessaires pour la mise en œuvre du procédé objet de l'invention, selon les modes de réalisation choisis et selon le type de véhicule.

Le procédé est maintenant décrit en référence à la figure 3. Un utilisateur, que ce dernier soit une personne physique 13 ou une personne morale 14 telle qu'une société, une association, une administration, doit lors d'une première étape, créé un compte utilisateur 15 auprès du loueur de véhicules. Ce compte utilisateur peut prendre en considération différents paramètres relatifs à l'utilisateur 13 ou 14. Ici, le terme utilisateur désignera la personne conduisant le véhicule, que cette personne soit ou non celle qui a effectué la location. Par la suite, les termes « utilisateur », »conducteur » seront employés indifféremment pour désigner le conducteur du véhicule.

Dans tous les cas, l'identité de l'utilisateur, ou de plusieurs utilisateurs désignés comme conducteurs dans le cas d'une personne morale 14, ainsi que la possession et la validité du permis de conduire de chaque utilisateur sont prises en compte. Un défaut de validité sur au moins un de ces deux points annule la procédure de location pour l'utilisateur concerné, cela au moins jusqu'à ce que le défaut de validité soit corrigé.

La création du compte utilisateur 15 est effectuée par connexion à une application 16 dédiée et sécurisée, soit à partir d'un ordinateur, d'une tablette informatique, d'un smartphone ou d'une borne spécifique. En variante, la création est réalisée en agence ou par téléphone.

Une fois le compte utilisateur 15 créé, l'utilisateur 13 ou 14 choisit un véhicule 1 dans une liste 17 proposée par le loueur, en fonction des disponibilités, du type de véhicule, des options désirées et de la position géographique du véhicule par rapport au lieu de prise en charge souhaitée.

Une fois le véhicule 1 choisi, la réservation est confirmée et un moyen d'ouverture et/ou de démarrage 18 du véhicule 1 est donné à l'utilisateur 13 ou 14. Il peut s'agir d'un code, envoyé par SMS, courriel, courrier postal ou vocalement par téléphone ou en agence, de la fourniture d'une clé, intelligente ou non. La clé est soit fournie par une borne automatique soit envoyée par courrier ou coursier. Pour mémoire, une clé intelligente est un organe électronique communiquant qui permet l'ouverture et/ou le démarrage du véhicule sans contact avec ce dernier, pour autant que le possesseur de ce type d'organe soit à une distance donnée du véhicule.

L'étape suivante s'effectue soit préalablement à l'ouverture du véhicule 1 par l'utilisateur 13 ou 14 soit lorsque ce dernier est en position dans le véhicule 1 et qu'il peut consulter des informations sur l'organe 11 du véhicule 1. Cette étape consiste à fournir un état du véhicule préalablement au démarrage du véhicule 1 par l'utilisateur 13 ou 14. Cet état initial du véhicule 1 est référencé 19. Il peut correspondre soit à un état de fin de location suite à une précédente location, soit à un état effectué par le loueur, après réparation, nettoyage et/ou mise en conformité du véhicule, que ce dernier ait été loué ou non avant. Il peut également s'agir de l'état du véhicule 1 avant sa première location, par exemple dans le cas d'un véhicule 1 neuf.

Selon un mode de réalisation, l'état du véhicule 19 est effectué par passage du véhicule 1 sous le portique 2. Dans ce cas, l'ensemble des capteurs externes et internes au véhicule 1 et ceux du portique 2 sont sollicités pour fournir une information au centre de gestion 4 sur l'état du véhicule 1. Cet état initial 19 est, si besoin, complété par l'utilisateur 13 ou 14, par exemple en cas d'oubli ou d'erreur dans un des points de vérification de l'état du véhicule. L'utilisateur peut également porter des remarques complémentaires, par exemple sur des points non prévus dans l'état initial 19 telle qu'une odeur de tabac forte, des vitres laissées ouvertes alors qu'il a plu avant son arrivée.

Une fois l'état initial 19 accepté par l'utilisateur 13 ou 14, lors du démarrage du véhicule 1 ou du moins lorsque l'utilisateur 13 ou 14 met en marche les appareils électriques et électroniques du véhicule en mettant le contact, le centre de gestion 4 initie, par le moyen de communication 12, l'activation des capteurs 6, 8 et 10, ce qui affiche sur l'organe d'affichage 11 les informations relatives à l'utilisateur, ses choix et la possibilité d'un tarif dit personnalisé. Cette étape est référencée 20 et, à partir de cet instant, l'utilisateur 13 ou 14 aura, soit en continu soit régulièrement, accès à un tarif personnalisé, étant entendu que ce tarif personnalisé est optionnel, l'utilisateur 13 ou 14 pouvant choisir de l'appliquer. Dans ce cas, il n'est plus possible de revenir à un tarif non personnalisé à la fin de la location. En variante, l'utilisateur a toujours la possibilité, en fin de location, de choir le tarif personnalisé ou non lors de la restitution du véhicule 1.

Par la suite, les différents capteurs 6, 8 et 10 collectent régulièrement ou en continu des données relatives au conducteur, au véhicule et au type de conduite de l'utilisateur ainsi que sur des paramètres relatifs aux conditions de circulation. Ainsi, les différents capteurs, y compris l'ordinateur interne du véhicule, sont mis à contribution pour collecter des informations concernant, à titre d'exemples non limitatifs, la localisation du véhicule, le nombre de passagers, la charge du véhicule, la présence d'une remorque ou d'un accessoire tel un coffre de toit ou un porte vélos, la vitesse instantanée et moyenne, la météorologie, la pression des pneus, la consommation, la sollicitation du moteur en termes de puissance et de rapports de vitesses, la sollicition des amortisseurs, la propreté de l'habitacle, le respect du code de la route et des conseils de conduite tel qu'un arrêt toutes les deux heures ou bien encore les conditions de circulation, le trafic routier. En d'autres termes, lors de cette étape, référencée 21, un ensemble de données permettant de vérifier si la conduite du véhicule 1 est optimale, c'est-à-dire si elle préserve au mieux l'intégrité et les caractéristiques du véhicule, des passagers et des autres usagers de la route est pris en compte et transféré au centre de gestion 4 via les moyens de transmission 5. On conçoit que la liste des paramètres considérés peut évoluer en cours d'utilisation du véhicule. Dans ce cas, le centre de gestion 4 assure la mise à jour des données à prendre en compte, en activant, désactivant ou modifiant des capteurs. Les données ainsi collectées sont comparées à des données précédemment collectées et/ou des données fournies par le constructeur et relatives à un véhicule 1 circulant selon des paramètres de conduite optimaux. La comparaison s'effectue, avantageusement, de manière automatique avec un logiciel spécifiquement développé par le centre de gestion 4. Un tel logiciel fonctionne avantageusement par apprentissage.

A l'issue de cette comparaison, effectuée en continu ou régulièrement, l'organe d'affichage 11 informe l'utilisateur 13 ou 14 du tarif actualisé 22, cela en fonction de sa conduite. Le tarif actualisé 22 est modulé par des paramètres externes indépendants de l'utilisateur et/ou du véhicule tels que les conditions de circulation, le trafic routier, l'état de la route et/ou la météorologie. Un tel affichage s'effectue soit selon une périodicité kilométrique ou temporelle, soit en continu soit à la demande du l'utilisateur. Dans tous les cas, le tarif est actualisé selon les paramètres collectés. L'utilisateur bénéficie donc d'un tarif en permanence à jour. Ainsi le tarif de location initial est minoré ou majoré selon la conduite de l'utilisateur. Un tel affichage permet à l'utilisateur d'adapter sa conduite et, en retour, d'avoir une motivation financière consistant à une minoration de son tarif initial.

, L'utilisateur peut aussi bénéficier de bonus qu'il pourra utiliser par exemple lors d'une autre location ou échangeable auprès de partenaires fournisseurs de services ou de produits. Une telle solution, référencée 23 à la figure 3, s'applique notamment dans le cas de la gestion locative d'une flotte pour une entreprise mais peut également s'appliquer pour une location unitaire.

En complément de l'affichage du tarif actualisé 22, le centre serveur 4 peut proposer à l'utilisateur de restituer le véhicule 1 à un endroit proche de sa destination mais qui correspond à une zone où le nombre de véhicules disponibles pour une future location est relativement faible. Cette incitation 24 se fait sous la forme d'un rabais sur le tarif actualisé 22.

A partir des données de géolocalisation, le tarif actualisé 22 n'est plus actualisé quelques kilomètres ou quelques minutes avant l'arrivée 25 à destination. Ainsi, un tarif actualisé final 26, donc un tarif actualisé figé et non modifiable par la conduite de l'utilisateur 13 ou 14 jusqu'au point de restitution, est affiché, par exemple, cinq kilomètres ou dix minutes avant l'arrivée.

le véhicule 1, une fois à destination ou plus précisément arrivé sur le lieu de restitution, subit alors un contrôle afin d'établir un état du véhicule final 27, cela de manière automatisée, à l'aide des capteurs externe et interne du véhicule 1 et du portique 2. En d'autres termes, le véhicule, en début et en fin de location passe un contrôle automatique à l'aide d'un portique 2 et des capteurs internes 6, 8 et 10. L'état final du véhicule 27 est transmis au centre de gestion 4.

Il est alors émis une facture 28 tenant compte non seulement du tarif actualisé final 26 mais également de l'état du véhicule final 27 et du respect des conditions de restitution initialement données à l'utilisateur, par exemple l'heure de restitution, le niveau de carburant.

En d'autres termes, si des anomalies ou dégradations et/ou incidents lors du parcours sont constatés, ils impactent négativement la facture 28. Cette dernière est accompagnée de l'état final 27 remis également à l'utilisateur 1. Avantageusement, un historique et/ou une comparaison entre le tarif initial et actualisé est également fourni à l'utilisateur. Le paiement s'effectue, par exemple, par prélèvement sur une carte bancaire, un compte client ou par tout autre moyen. On conçoit que des frais supplémentaires, par exemple, le paiement d'une contravention, peuvent ultérieurement être ajoutés à la facture de l'utilisateur 13 ou 14, cela à réception desdits frais par le loueur.

Un récapitulatif 29 de la location et/ou du trajet et/ou du paiement est adressé à l'utilisateur 13 ou 14.

L'utilisateur, à l'issue de la location peut programmer une autre location, en choisissant dès maintenant le type de tarif qu'il souhaite.

## Revendications

1. Procédé de gestion locative de véhicules (1) comprenant au moins une étape de collecte d'au moins une donnée concernant le véhicule (1), d'au moins une donnée (10) concernant l'utilisateur (13, 14), de paramètres relatifs aux conditions de circulation, une étape de transfert desdites données à un centre de gestion (4) des véhicules en location, une étape d'envoi d'au moins une instruction depuis le centre de gestion (4) au véhicule, **caractérisé en ce qu'**il comprend également au moins une étape d'envoi à l'utilisateur (13, 14) d'un tarif actualisé final (26) selon les données reçues par le centre de gestion (4) et **en ce que** lors du trajet et avant l'envoi du tarif actualisé final (26), un tarif actualisé (22) en fonction de la conduite et de l'état du véhicule obtenu par la collecte des données à l'aide de capteurs (3, 6, 8, 10) est régulièrement fourni (11) à l'utilisateur (13, 14) par le centre de gestion (4).

2. Procédé selon la revendication 1, **caractérisé en ce que** l'étape de collecte de données concernant le véhicule (1) et l'utilisateur (13, 14) est faite de manière automatisée par un portique (2) adapté (3) pour collecter des données (3) relatives à l'extérieur du véhicule (1) et par des capteurs (6; 8, 10) internes au véhicule (1) et donne lieu à un état (19; 27) du véhicule (1), cela lors de la prise et de la restitution du véhicule (1).

3. Procédé selon la revendication 1, **caractérisé en ce que** l'étape d'envoi du tarif actualisé final (26) est effectuée quelques kilomètres ou quelques minutes avant l'arrivée (25) à destination du véhicule.

4. Dispositif de mise en œuvre du procédé de gestion locative de véhicules conforme à une des revendications précédentes, comportant au moins un capteur (3, 6, 8, 10) de données relatives à la géolocalisation du véhicule (1), un capteur (3) de l'état extérieur du véhicule, un capteur du niveau de carburant, un module (12) de transfert des données collectées à un centre de gestion (4) distant, **caractérisé en ce qu'**il comprend au moins un capteur de l'état de l'intérieur du véhicule, un capteur (8) d'au moins une donnée concernant le fonctionnement du moteur (9), un capteur (10) d'au moins une donnée concernant le conducteur, un module (11) de réception et d'affichage d'informations émises par le centre de gestion (4).

5. Dispositif selon la revendication 4, **caractérisé en ce qu'**il comprend un capteur d'au moins une donnée relative aux capacités du conducteur à conduire, un capteur (6) d'au moins une donnée relative au châssis du véhicule, au train roulant (7) du véhicule, à la charge du véhicule, à la présence d'accessoires.

6. Dispositif selon la revendication 4, **caractérisé en ce qu'**il comprend un capteur d'au moins une donnée météorologique, une donnée relative aux conditions de circulation routière et à l'état de la route.
